# EUROPÄISCHE PATENTSCHRIFT

(11) **EP 2 504 710 B1**
(45) Veröffentlichungstag und Bekanntmachung des Hinweises auf die Patenterteilung: **22.06.2016**
(21) Anmeldenummer: 10778847.3
(22) Anmeldetag: 12.10.2010
(51) Int. Cl.: G01P 5/26, G01P 3/36

(54) **OPTISCHES MIKROARRAYBASIERTES ORTSFILTER, UND ANORDNUNG UND VERFAHREN ZUR BESTIMMUNG VON GESCHWINDIGKEITEN VON BEWEGENDEN MESSOBJEKTEN**
OPTICAL MICROARRAY-BASED SPATIAL FILTER, AND APPARATUS AND METHOD FOR MEASUNG THE VELOCITIES OF MOVING OBJECTS
FILTRE OPTIQUE DE POSITION À BASE DE MICRO-RÉSEAU, ET DISPOSITIF ET PROCÉDÉ DE MESURE DES VITESSES D'OBJETS EN MOUVEMENT

(30) Priorität: 26.11.2009 DE 102009047198
(43) Veröffentlichungstag der Anmeldung: 03.10.2012
(73) Patentinhaber: Micro-Epsilon Optronic GmbH, 01465 Dresden-Langebrück (DE)
(72) Erfinder: DEGNER, Martin, 18236 Kröpelin (DE); DAMASCHKE, Nils, 18211 Bargeshagen (DE); SCHAEPER, Martin, 18057 Rostock (DE); MENN, Ingolf, 17159 Dargun (DE)
(74) Vertreter: Patent- und Rechtsanwälte Ullrich & Naumann
(86) Internationale Anmeldenummer: PCT/EP2010/006226
(87) Internationale Veröffentlichungsnummer: WO 2011/063876

(56) Entgegenhaltungen:
- EP-A1- 0 911 667
- EP-A1- 1 400 780
- WO-A1-2009/072484
- DE-A1- 19 549 074
- JP-A- 7 120 484
- US-A- 3 677 647
- US-A- 3 711 200
- US-A- 3 902 804
- US-A1- 2003 174 939
- US-A1- 2010 245 811

## Beschreibung

Die Erfindung betrifft eine Ortsfiltermessanordnung mit wenigstens einem Sensor und einem Ortsfilter, wobei von einem Messobjekt ausgestrahlte oder reflektierte elektromagnetische Strahlung, insbesondere Licht, über den Ortsfilter auf den Sensor abgebildet wird. Die Erfindung betrifft weiter eine Ortsfiltermessvorrichtung, eine Verwendung eines Spiegelarrays als Ortsfilter in einer Ortsfiltermessanordnung sowie ein Verfahren zur Ortsfiltermessung.

Die Ortsfiltermesstechnik ist ein etabliertes, robustes und effizientes Verfahren zur berührungslosen Bestimmung von Geschwindigkeiten von Messobjekten, beispielsweise von Gasen, Fluiden oder Festkörpern. Ortsfiltermesstechnik funktioniert ohne mechanisch bewegte Teile, verschleißfrei und zuverlässig. Es gibt weder Schlupf noch Abnutzung, die die Messung oder die Apparatur beeinträchtigen. Neben einer Geschwindigkeitsmessung werden auch Beschleunigungen, der Ort bzw. die Position von Messobjekten oder andere anwendungsspezifische Größen wie ein Volumenstrom oder ein Materialfluss, Teilchengrößen oder Teilchengrößenverteilungen gemessen.

Ein Großteil der Signalverarbeitung, die mit der Umwandlung von Bewegung in eine (Orts-)Frequenz einhergeht, ist bereits im Aufbau von bekannten Ortsfiltermessvorrichtungen oder Ortsfiltermessanordnungen realisiert, da diese einen Hardwarekorrelator darstellen. Zur Ortsfrequenzmessung bedarf es keiner ausgezeichneten Punktquelle. Bildinformationen werden korreliert und eine bewegungsäquivalente Frequenz gebildet. Die Signalauswertung liefert eine einfache und starke Datenreduktion.

Die Ortsfiltermesstechnik beruht, vereinfacht dargestellt, auf dem Prinzip, dass ein bewegter Gegenstand oder eine bewegte Oberfläche, die an einem optischen Gitter mit einer, ggf. periodischen, Struktur von durchlässigen und nicht durchlässigen Gitterlinien vorbeibewegt wird, ein periodisches Signal erzeugt, dessen Frequenz sowohl von der Geschwindigkeit der Bewegung des Objekts als auch von den Gitterparametern bzw. von der Gitterkonstanten des optischen Gitters abhängt. In diese Abhängigkeit fließen auch beispielsweise Vergrößerungsfaktoren von optischen Linsen, Linsensystemen oder anderen optischen Elementen ein, die in einigen Fällen verwendet werden.

Wenn die Gitterstruktur bekannt ist und gegebenenfalls bekannt ist, welchen Vergrößerungsfaktor eine Optik aufweist, die im Strahlengang einer Ortsfiltermessanordnung verwendet wird, kann aus der Frequenz des beobachteten Signals auf die Bewegungsgeschwindigkeit des Messobjekts rückgeschlossen werden. Dabei wird, etwa im Fall eines linearen Gitters mit parallelen Gitterlinien, diejenige Geschwindigkeitskomponente der Bewegung erfasst, die senkrecht zur Ausrichtung der Gitterlinien des Ortsgitters ist. Eine Geschwindigkeitskomponente, die parallel zur Ausrichtung der Gitterlinien ist, führt nicht zu einer Modulation des durch das Gitter durchgelassenen Lichts. Diese Komponente wird daher nicht gemessen.

Bei einer gleichförmigen Bewegung ergibt sich bei einem linearen Gitter als Ortsfilter ein Frequenzgang mit einem deutlichen Maximum, das der Bewegungskomponente des Messobjekts senkrecht zur Ausrichtung der Gitterlinien entspricht. Diesem Frequenzmaximum ist ggf. ein weiteres Frequenzspektrum überlagert, das von einer ggf. vorhandenen Oberflächenrauigkeit der Oberfläche des Messobjekts herrührt. Die von den Regelmäßigkeiten oder Unregelmäßigkeiten der Oberfläche erzeugten Ortsfrequenzen können als Messeffekt genutzt werden, sie können aber auch zu Mehr- oder Doppeldeutigkeiten in der Interpretation der Messergebnisse führen.

Im Wesentlichen sind zwei verschiedene Ansätze zur Ortsfiltermessung bekannt. In einem ersten Ansatz wird die Ortsfiltermessung mit Hilfe von Hardware-Ortsfiltern realisiert. Bei derartigen Ortsfiltern handelt es sich um diskrete optische Bauelemente, etwa um optische Gitter. Das Licht, das von einem bewegten Messobjekt durch ein optisches Gitter als Ortsfilter hindurchtritt, wird dabei zeitlich moduliert. Die Modulationsfrequenz hängt u. a. von der Geschwindigkeit des Messobjekts und von der Ausrichtung des optischen Gitters sowie dessen Gitterparameter bzw. Gitterkonstante ab. Wenn eine Vergrößerungsoptik verwendet wird, wächst auch die Modulationsfrequenz mit dem Vergrößerungsfaktor.

Das zeitlich modulierte Licht wird beispielsweise mittels Photodioden detektiert, die eine hohe Grenzfrequenz, beispielsweise etwa 10 MHz oder bis in den GHz-Bereich, aufweisen. Aufgrund der schnellen Reaktionszeit der Photodioden können nach diesem ersten Ansatz in der Ortsfiltermessung sehr schnelle Signale und sehr hohe Frequenzen verarbeitet werden, soweit genügend Licht vorhanden ist. Dazu wird die Hardware, also u. a. die verwendete Optik und die verwendeten Ortsfilter, an die jeweiligen Einsatzbedingungen angepasst, beispielsweise bezüglich der messenden Geschwindigkeiten, der Oberflächenbeschaffenheit der Messobjekte. Bei der Anpassung wird erreicht, dass für die jeweiligen Einsatzbedingungen und die zu messenden Größen optimale Modulationssignale eingestellt werden. Damit sollen Mehrdeutigkeiten oder destruktive Resonanzen beispielsweise mit den Gitterparametern des Ortsfilters vermieden und ein gutes Signal-zu-Rauschen-Verhältnis erreicht werden.

Dieser erste Ansatz mit diskreten optischen Bauelementen als Ortsgitter bietet eine sehr hohe zeitliche Auflösung der Messung durch den möglichen Einsatz sehr schneller Empfänger. Die Hardwareanpassung ist jedoch aufwendig. Aufgrund der geringen Flexibilität ist es möglich, dass Mehrdeutigkeiten in den Messergebnissen und ungewollte Korrelationen zu Oberflächenparametern unter Umständen nicht erkannt werden.

In einem zweiten Ansatz wird auf den Einsatz von Hardware-Ortsfilter verzichtet. Stattdessen wird die Ortsfiltermessung durch eine spezielle Signalverarbeitung von zeilen- oder flächenhaften Empfängern, z.B. Kameras mit CCD- oder CMOS-Chips, umgesetzt. In diesem Fall sind keine optischen Gitter notwendig, sondern die gitter- bzw. matrixartige Strukturierung des optischen Empfängers wird zur Ortsfiltermessung ausgenutzt.

Die Ortsfiltermessung umfasst dabei die Herstellung von Korrelation oder Summation der Signale von einzelnen Bildpunkten, wobei auf rechnerischem Wege ein Ortsfiltereffekt erzeugt wird. So können ohne Änderung der Hardware alleine aufgrund der in einer Software einstellbaren Änderung der verwendeten Auswerteroutinen verschiedene Ortsfilter angewandt werden. Dies ist vergleichbar mit dem Austausch von optischen Gittern nach dem oben genannten ersten Ansatz. Die Ortsfiltermessung nach dem zweiten Ansatz ist sehr flexibel und leicht an verschiedene Einsatzbedingungen anpassbar. Es können komplexe Ortsfilter- und Korrekturalgorithmen implementiert werden, wodurch mögliche Mehrdeutigkeiten und Fehler stark minimiert werden.

Allerdings ist die Grenzgeschwindigkeit der CCD- und CMOS-Chips um mehrere Größenordnungen kleiner als bei Photodioden. Sie beträgt bei CCDs oder CMOS-Sensoren ca. 10 bis 20 kHz. Diese Sensoren erlauben allerdings keine kontinuierliche Messung, da die Menge an Bilddaten nicht in Echtzeit übertragen und verarbeitet werden kann. Bedingt durch das langsame Signalverhalten dieser Sensoren ist die zeitliche Auflösung der Messung deutlich stärker beschränkt als beim ersten Ansatz. Damit ist im Vergleich zum ersten Ansatz nur ein Bruchteil der Bandbreite des Ortsfrequenzspektrums erreichbar, so dass der zweite Ansatz in Fällen, in denen hohe Ortsfrequenzen vorherrschen, nicht anwendbar ist. Bedingt durch diese geringere zeitliche Auflösung ist es nicht in allen Anwendungsfällen möglich, Mehrdeutigkeiten des Messsignals auszuräumen und zu einem eindeutigen Messergebnis zu gelangen.

Eine Ortsfiltermessanordnung mit den Merkmalen des Oberbegriffs des Anspruchs 1 ist von JP7120484 bekannt.

Angesichts dieser bekannten Ansätze der Ortsfiltermessung liegt die der Erfindung zugrunde liegende Aufgabe darin, eine Ortsfiltermessanordnung, eine Ortsfiltermessvorrichtung und ein Verfahren zur Ortsfiltermessung zur Verfügung zu stellen, mit denen eine sichere, genaue und Mehrdeutigkeiten vermeidende Ortsfiltermessung ermöglicht wird, die zudem flexibel an verschiedene Einsatzbereiche anpassbar sein soll.

Die der Erfindung zugrunde liegende Aufgabe wird gelöst durch eine Ortsfiltermessanordnung mit wenigstens einem Sensor und einem Ortsfilter, wobei von einem Messobjekt ausgestrahlte oder reflektierte elektromagnetische Strahlung, insbesondere Licht, über den Ortsfilter auf den Sensor abgebildet wird, wobei die Ortsfiltermessanordnung dadurch weitergebildet wird, dass das Ortsfilter als Spiegelarray, insbesondere als Mikrospiegelarray, ausgebildet ist, das bewegbare Spiegelelemente aufweist.

Die Erfindung beruht auf dem Grundgedanken, dass durch die Verwendung eines Spiegelarrays mit bewegbaren Spiegelelementen ein anpassbarer oder veränderlicher Hardware-Ortsfilter geschaffen wird. Durch diese Maßnahme werden die Vorteile der oben beschriebenen Ortsfiltermessansätze miteinander kombiniert, nämlich eine hohe Bandbreite wie im oben beschriebenen ersten Ansatz und die Flexibilität des zweiten Ansatzes. Gleichzeitig wird die Limitation bezüglich der Beseitigung von Mehrdeutigkeiten der Messung eliminiert, die beiden oben beschriebenen Ansätzen innewohnt.

Erfindungsgemäß wird unter dem Begriff "Licht" insbesondere sichtbares Licht sowie die benachbarten Frequenzbereiche des ultravioletten und infraroten Spektrums verstanden. Aber auch mit anderen Frequenzbereichen des elektromagnetischen Spektrums, wie u. a. weichen Röntgenstrahlen, Teraherzwellen oder Mikrowellen, ist die erfindungsgemäße Ortsfiltermessanordnung verwendbar, wobei solche Spiegelelemente zu verwenden sind, die die entsprechenden Frequenzbereiche reflektieren. Auch die Dimensionierung der Spiegelelemente richtet sich danach, welche Wellenlänge verwendet werden soll.

Für den optischen Bereich sind als Spiegelarrays Mikrospiegelarrays einsetzbar, wie sie beispielsweise in Projektionsgeräten wie Beamern zum Einsatz kommen. Diese aus dem Gebiet der mikroelektromechanischen Systeme (MEMS) stammenden Bauteile bieten neben einer hohen Lichtstärke teilweise eine noch höhere Auflösung als herkömmlich nach dem oben beschriebenen zweiten Ansatz verwendete CCD- oder CMOS-Chips. Sensor-Chips mit höheren Auflösungen sind zwar erhältlich, jedoch geht die hohe Zahl der Bildpunkte zulasten der Auslesegeschwindigkeit und Bildwiederholfrequenz. Die Spiegelarrays sind robust und sowohl für sehr hohe Geschwindigkeiten geeignet als auch flexibel einsetzbar, online adaptierbar und regelbar. Sie ermöglichen Umschaltfrequenzen von bis zu 24 kHz. Die Messdauer, bevor eine Umschaltung der Spiegelelemente erfolgt, wird in der Regel aufgrund der notwendigen Lichtausbeute jedoch länger sein als die durch die maximale Umschaltfrequenz bedingte kürzest mögliche Messdauer.

Die Auswahl der Struktur des verwendeten optischen Gitters mit seiner Gitterkonstanten und der weiteren Gitterparametern und somit die Auswahl u. a. der gemessenen Bewegungsrichtung geschieht erfindungsgemäß nicht in einer der Signalerfassung nachgeschalteten Signalverarbeitung, sondern durch die Einstellung der Spiegelelemente des Spiegelarrays. Die Signalverarbeitung kann, insbesondere, wenn schnelle und nicht segmentierte Sensoren wie beispielsweise nicht segmentierte Photodioden Anwendung finden, auf bekannte Weise geschehen.

Durch den Einsatz von Spiegelarrays im optischen Pfad der Anordnung wird eine frei wählbare Ortsfilterstruktur mit sehr hoher örtlicher Auflösung erreicht. Das auf diese Weise gewichtete Licht wird dann auf eine im Vergleich zur optischen Auflösung des Systems stark reduzierte Anzahl von, insbesondere sehr schnellen, Photoempfängern geleitet. Trotz der auf diese Weise erreichbaren hohen zeitlichen Auflösung des Ortsfiltermesssignals ist die Komplexität und Variabilität des Ortsfilters nicht eingeschränkt. So können messtechnische Aufgabenstellungen realisiert werden, wie sie aus Bereichen der komplexen Ortsfiltermesstechnik oder der Bildverarbeitung bekannt sind, wobei das System auch in hohen Stückzahlen zu vergleichsweise geringen Kosten hergestellt werden kann.

Vorzugsweise ist eine Steuervorrichtung zur Steuerung der Bewegung der Spiegelelemente und/oder eine Auswertevorrichtung zur Auswertung von Signalen des wenigstens einen optischen Sensors vorgesehen. Die Steuervorrichtung und die Auswertevorrichtung können auch gemeinsam, insbesondere in einer Datenverarbeitungsanlage, integriert sein.

Mittels der Steuervorrichtung zur Steuerung der Bewegung der Spiegelelemente kann einerseits das Spiegelarray-basierte Ortsfilter flexibel an gegebene Messbedingungen angepasst werden. Andererseits kann mittels der Steuervorrichtung eingestellt werden, dass die Gitterstruktur, die mit dem Spiegelarray erzeugt wird, im Laufe der Messung verändert wird. So kann beispielsweise zwischen einem vertikalen und einem horizontalen Linienmuster hin und her geschaltet werden oder weitere Ausrichtungen der Linienmuster eingestellt werden, so dass die Messung einer Bewegung in verschiedene, insbesondere aufeinander senkrecht stehende, Richtungen, möglich ist. Damit werden verschiedene Bewegungskomponenten gemessen und die gesamte Bewegungsrichtung erfasst.

Die dynamische Gitteranpassung führt zur Erhöhung der Messgenauigkeit, Störsicherheit des Systems und zur Unterdrückung von bisher auftretenden Mehr- oder Doppeldeutigkeiten in der Messung. Die Anordnung bietet eine hohe Signalqualität, da die Bewegungsinformation aus einem zweidimensionalen Feld gebildet wird und dadurch bereits in der Hardwarekorrelation eine Mittelung mit einer Rausch- und Fehlerreduktion erfolgt.

Vorzugsweise ist der wenigstens eine Sensor eine Photodiode, ein Phototransistor, eine segmentierte Photodiode, eine Photodiodenzeile oder eine Phototransistorzeile, eine Photodiodenmatrix oder eine Phototransistormatrix, ein CCD-Array oder ein CMOS-Array.

Photodioden und Phototransistoren haben, ebenso wie segmentierte Photodioden, eine sehr hohe zeitliche Dynamik und erlauben eine Messung mit hoher Bandbreite, einschließlich hoher Ortsfrequenzen. Da sie außerdem in vielen Fällen eine vergleichsweise hohe sensitive Fläche und optische Ausbeute aufweisen, ist mit ihnen die Erfassung eines schnellen Signals bei gleichzeitig geringem Signal-zu-Rauschen-Verhältnis möglich. Mit Photodioden ist die Messung im MHz- bis GHz-Frequenzbereich möglich.

Die Kombination eines Spiegelarrays als Ortsfilter mit segmentierten Sensoren, wie beispielsweise einem CCD-Array oder CMOS-Array, erlaubt weitere Analysemöglichkeiten, auch wenn die Auslesegeschwindigkeit eines CCD-Arrays oder eines CMOS-Arrays geringer ist als die mit einer Photodiode erreichbare Geschwindigkeit.

Vorzugsweise ist wenigstens ein optisches Element, insbesondere eine optische Linse, eine Linsenanordnung und/oder ein Kollimator, in einem Strahlengang der elektromagnetischen Strahlung vorgesehen. Mittels des optischen Elements wird vorteilhafterweise eine gute Abbildungsleistung und eine hohe Lichtstärke erreicht, so dass auch mit dieser Maßnahme ein hohes Signal-zu-Rauschen-Verhältnis erreichbar ist. Das optische Element kann auch vergrößernd oder verkleinernd wirken, so dass die Ortsfiltermessanordnung an ein entsprechendes Messobjekt weiter anpassbar ist.

Eine vorteilhafte Weiterbildung der erfindungsgemäßen Ortsfiltermessanordnung besteht darin, dass eine Mehrzahl von Sensoren oder wenigstens ein Sensor mit mehreren Segmenten vorgesehen ist, wobei jeder Sensor oder jedes Sensorsegment, insbesondere mittels vorgeschalteter optischer Elemente, nur eine Sektion des Spiegelarrays im Sichtfeld hat. Dabei kann jede Sektion des Spiegelarrays eine unterschiedliche Gitterstruktur aufweisen, so dass mehrere unabhängige Ortsfiltermessungen innerhalb einer Anordnung gleichzeitig vorgenommen werden können. Dies kann die gleichzeitige Messung verschiedener Bewegungskomponenten einer Bewegung ebenso sein wie die Einstellung verschiedener Gitterkonstanten bzw. Gitterparameter oder gänzlich verschiedener, auch nichtlinearer, Gitterstrukturen.

Vorteilhafterweise sind die Spiegelelemente des Spiegelarrays in wenigstens zwei verschiedenen Richtungen zwischen jeweils wenigstens zwei festen Winkelpositionen bewegbar. Beispielsweise ist es möglich, die einzelnen Spiegelelemente zwischen einer Maximalstellung in einer Richtung und einer Maximalstellung in einer anderen Richtung hin und her zu bewegen, wodurch einfallende Lichtstrahlen in einer Stellung auf einen Sensor gelenkt werden können und in der anderen Stellung von dem Sensor weg, insbesondere auf einen anderen Sensor hin. Dies geschieht in wenigstens zwei Richtungen, also beispielsweise in einer vertikalen und einer horizontalen Richtung relativ zu einer Normalen auf ein Spiegelarray, dessen Spiegelelemente in horizontalen und vertikalen Reihen bzw. Spalten angeordnet sind.

In einer vorteilhaften Weiterbildung sind die Spiegelelemente des Spiegelarrays in wenigstens zwei verschiedenen Richtungen in ihren jeweiligen Winkelstellungen stufenlos oder quasi stufenlos bewegbar. Das bedeutet, dass ohne Stufen oder nur mit sehr kleinen Winkelabstufungen innerhalb maximaler Grenzen in zwei Richtungen, also beispielsweise vertikal und horizontal, wenigstens beinahe jede beliebige Winkelstellung eingenommen werden kann. Damit ist es möglich, unter Einbeziehung der Spiegelelemente des Spiegelarrays eine optische Korrektur oder optische Fokussierung zu erreichen, oder in verschiedenen Teilen oder Sektionen des Spiegelarrays verschiedene Sensoren anzusteuern.

Weiter vorzugsweise sind wenigstens zwei Sensoren vorgesehen, die von Spiegelelementen des Spiegelarrays ansteuerbar sind, wobei bei Einstellung einer Gitterstruktur durch eine Auswahl oder Festlegung von Winkelstellungen der Spiegelelemente des Spiegelarrays ein Sensor elektromagnetische Strahlung von einer ersten Menge von Spiegelelementen mit einer ersten Winkelstellung empfängt und ein anderer Sensor elektromagnetische Strahlung von einer zweiten Menge von Spiegelelementen mit einer zweiten Winkelstellung empfängt, wobei die erste Menge und die zweite Menge von Spiegelelementen aus wenigstens einer Sektion des Spiegelarrays ausgewählt sind und in Bezug auf die wenigstens zwei Sensoren ein Positiv und ein Negativ einer Gitterstruktur zueinander bilden.

Diese bevorzugte Ausbildung ist vergleichbar mit einer Anordnung, deren Ortsfilter aus einem optischen Gitter besteht, dessen Gitterlinien verspiegelt sind, so dass in den Zwischenräumen zwischen den Gitterlinien Licht durch das Ortsfilter hindurch dringen kann, während an den verspiegelten Gitterlinien Licht zurück reflektiert wird. Wenn in diesem Fall sowohl vor als auch hinter dem Ortsfilter jeweils ein Sensor angeordnet ist, so empfängt der eine Sensor das Negativ dessen, was der andere Sensor empfängt. In einem solchen Fall ist eine Differenzmessung möglich, wodurch eine weiter erhöhte Messgenauigkeit erzielt wird und das Signal-zu-Rausch-Verhältnis ebenfalls weiter verbessert wird. Dies wird im vorliegenden Fall dadurch erzielt, dass in verschiedenen Winkelstellungen Licht zu verschiedenen Sensoren hin reflektiert wird.

Die der Erfindung zugrunde liegende Aufgabe wird auch gelöst durch eine Ortsfiltermessvorrichtung, die eine erfindungsgemäße oben beschriebene Ortsfiltermessanordnung umfasst. Eine solche Ortsfiltermessvorrichtung ist als Einheit transportabel oder einbaubar und enthält bereits alle zur Ortsfiltermessung erforderlichen Bestandteile.

Die der Erfindung zugrunde liegende Aufgabe wird weiter durch eine Verwendung eines Spiegelarrays, insbesondere eines Mikrospiegelarrays, als Ortsfilter in einer Ortsfiltermessanordnung bzw. einer Ortsfiltermessvorrichtung gelöst.

Dabei wird unter einem Mikrospiegelarray ein Spiegelarray mit kleinen Spiegelelementen verstanden. So sind derzeit beispielsweise für optische Projektionsgeräte bzw. Beamer Mikrospiegelarrays erhältlich, deren Spiegelelemente eine Kantenlänge von 10 µm aufweisen. Solche Mikrospiegelarrays weisen mehrere 100.000 bis mehrere Millionen Spiegelelemente auf. Dies ermöglicht eine hohe Lichtausbeute, eine kleine Gitterkonstante entsprechend einer hohen räumlichen Frequenz sowie ggf. eine Aufteilung des Mikrospiegelarrays in mehrere Sektionen. Darin können verschiedene Gitterstrukturen parallel erzeugt werden, um beispielsweise mehrere Bewegungskomponenten oder andere Eigenschaften eines Messobjekts gleichzeitig zu messen.

Die der Erfindung zugrunde liegende Aufgabe wird auch gelöst durch die Verwendung einer erfindungsgemäßen Ortsfiltermessanordnung oder einer Ortsfiltermessvorrichtung zur Messung einer Geschwindigkeit, einer Bewegungsrichtung, einer Teilchengröße und/oder einer Oberflächenbeschaffenheit eines Messobjekts.

Schließlich wird die der Erfindung zugrunde liegende Aufgabe durch ein Verfahren zur Ortsfiltermessung gelöst, bei dem von einem Messobjekt ausgestrahlte oder reflektierte elektromagnetische Strahlung, insbesondere Licht, über einen als Spiegelarray, insbesondere Mikrospiegelarray, mit beweglichen Spiegelelementen ausgebildeten Ortsfilter auf wenigstens einen Sensor abgebildet wird, wobei durch die örtliche Verteilung der Winkelstellungen der Spiegelelemente des Spiegelarrays ein Ortsfilter mit einer Gitterstruktur erzeugt wird. Dieses Verfahren bietet die oben bereits beschriebenen Vorteile.

Vorzugsgemäß werden als Gitterstruktur ein regelmäßiges Liniengitter, ein Chirp-Gitter mit in einer Richtung sich verändernder Gitterkonstante oder ein Ringgitter eingestellt.

Regelmäßige Liniengitter sind geeignet, die Geschwindigkeit einer Bewegung eines Messobjekts in der Richtung, die senkrecht auf die Ausrichtung der Gitterlinien des regelmäßigen Liniengitters steht, zu messen. Dieses Signal, das eine sehr definierte Frequenz hat, ist ggf. überlagert von einem Frequenzspektrum, das auf eine unregelmäßige Oberflächenbeschaffenheit eines Messobjekts zurückgeht.

Ein so genanntes "Chirp"-Gitter ist ebenfalls ein Liniengitter, bei dem sich allerdings die Gitterkonstante in einer Richtung, die senkrecht zur Ausrichtung der Gitterlinien ist, verändert. Dies bedeutet, dass der Abstand zwischen den Linien und deren Breite nach einer Richtung hin zunimmt und in die entgegengesetzte Richtung abnimmt. Ein solches Chirp-Gitter wird etwa zur Messung der Größe von Teilchen benutzt. Ein Teilchen, das sich mit konstanter Geschwindigkeit an einem Chirp-Gitter vorbeibewegt, erzeugt ein Signal, das mit einer Sinuskurve verglichen werden kann, deren Zeitkonstante sich mit der Zeit vergrößert oder verkleinert. Die Teilchengröße ist bei bestimmten Gitterabständen mit dem Gitterabstand destruktiv resonant, so dass die Amplitude des modulierten Signals einbricht. Darum kann aus den Minima der Umhüllenden des Signals auf die Teilchengröße zurückgeschlossen werden.

Ein Ringgitter besteht aus einer Abfolge von konzentrischen Ringen mit gleichem oder größer oder kleiner werdendem Abstand in radialer Richtung. Eine mögliche Anwendung ist die Messung eines Zentrums einer Rotationsbewegung.

In einer vorteilhaften Weiterbildung wird das Spiegelarray in verschiedene Sektionen aufgeteilt, in denen jeweils verschiedene Gitterstrukturen oder Gitter mit verschiedenen Eigenschaften, insbesondere Ausrichtung und/oder Gitterkonstante des Gitters, eingestellt werden. So ist es möglich, das Spiegelarray in zwei oder mehr Sektionen aufzuteilen, in denen beispielsweise ein horizontal und ein vertikal ausgerichtetes Gitter ausgebildet wird, so dass eine Messung der Horizontal- und der Vertikalkomponente der Bewegung eines Messobjekts gleichzeitig stattfinden kann.

Es können auch mehrere Sektionen vorgesehen sein, in denen parallel ausgerichtete Gitterstrukturen mit unterschiedlichen Gitterkonstanten eingestellt werden, so dass Mehrdeutigkeiten in der Bestimmung der Bewegungsgeschwindigkeit des Messobjekts ausgeräumt werden. In diesem Fall wird das Licht, das in den verschiedenen Sektionen des Spiegelarrays mit verschiedenen Gitterstrukturen zurückgeworfen wird, vorzugsweise von jeweils verschiedenen Sensoren aufgenommen.

In einer weiteren vorteilhaften Weiterbildung oder einer alternativen Ausbildung des erfindungsgemäßen Verfahrens wird die eingestellte Gitterstruktur während einer Messung verändert. So ist es beispielsweise möglich, zwischen einem horizontalen Gitter und einem vertikalen Gitter hin und her zu schalten, um bei größerer Lichtausbeute unter Benutzung der gesamten Fläche des Spiegelarrays nacheinander verschiedene Bewegungskomponenten der Bewegung des Objekts zu erfassen.

Hierzu ist vorzugsweise vorgesehen, dass die Ausrichtung und/oder die Gitterkonstante der Gitterstruktur verändert werden und/oder die Gitterstruktur im Verlauf einer Messung rotiert wird. Eine fortlaufende Rotation eines linearen Gitters hat den Effekt, dass der Richtungszeiger, der angibt, in welche Richtung die momentan gemessene Bewegungskomponente des Messobjekts zeigt, fortlaufend rotiert wird, so dass beispielsweise bei einer linearen oder gleichmäßigen Drehung in einer Richtung ein sinusförmig frequenzmoduliertes Signal auftritt.

Eine kontinuierliche Veränderung der Gitterkonstanten, insbesondere bei gleichbleibender Ausrichtung der Gitterlinien, hat einen mit einem Chirp-Gitter vergleichbaren Effekt. Auf diese Weise wird etwa die Strukturierung der Oberfläche eines Messobjekts im Einzelnen effizient ausgewertet.

Vorzugsweise werden mit einem Spiegelarray, deren Spiegelelemente in ihren Winkelstellungen stufenlos oder quasi stufenlos bewegbar sind, in verschiedenen Sektionen des Spiegelarrays verschiedene Sensoren angesteuert. So sind mittels eines einzelnen Spiegelarrays und mehreren Sensoren gleichzeitig Ortsfiltermessungen mit verschiedenen Gitterstrukturen möglich, so dass gleichzeitig verschiedene Bewegungsrichtungen und/oder Oberflächenstrukturen erfassbar sind.

In einer vorteilhaften Weiterbildung werden mit einem Spiegelarray, dessen Spiegelelemente in ihren Winkelstellungen stufenlos oder quasi stufenlos bewegbar sind, durch eine Einstellung der Winkelstellungen optische Korrekturen und/oder Fokussierungen vorgenommen. So kann das Spiegelarray zusätzlich zur Aufgabe, ein optisches Gitter bereitzustellen, auch anstelle einer fokussierenden Linse deren Aufgabe übernehmen. Auch Abbildungsfehler von Linsen können auf diese Weise ganz oder teilweise korrigiert werden.

Ein besonders hohes Signal-zu-Rauschen-Verhältnis wird vorteilhafterweise erzielt, wenn wenigstens zwei verschiedene Sensoren mit Spiegelelementen in verschiedenen Winkelstellungen angesteuert werden, wobei die durch die Verteilung der Spiegelelemente erzeugte Gitterstruktur in Bezug auf einen Sensor das Negativ der Gitterstruktur in Bezug auf den anderen Sensor ist. Mit den beiden Messungen, die positiv und negativ zueinander sind, kann eine Differenzmessung durchgeführt werden, in der das Signal-zu-Rauschen-Verhältnis wegen der doppelt so großen verwendeten Lichtmenge um ca. 30% vermindert ist.

Eine flexible Anpassung des Verfahrens ist vorzugsweise möglich, wenn zu Beginn einer Messung automatisch an ein Messobjekt und/oder ein Messziel angepasste Gitterparameter, insbesondere für ein optimiertes Signal-zu-Rauschen-Verhältnis, gesucht und eingestellt werden. Die Beurteilung des Optimierungsparameters, beispielsweise das Signal-zu-Rauschen-Verhältnis, geschieht in einem solchen Fall nach bekannten Methoden und Algorithmen, während Gitterparameter laufend angepasst werden, bis ein optimaler Wert gefunden worden ist.

Dies kann sich bei einer linearen Bewegung eines Messobjekts darin äußern, dass die Ausrichtung eines linearen regelmäßigen Gitters so lange verändert wird, bis die Gitterlinien senkrecht auf die ansonsten konstante Bewegungsrichtung des Messobjekts steht. Dies entspricht einem Maximum der Ortsfrequenz. Die Gitterkonstante kann so eingestellt werden, dass sie möglichst fern von destruktiven Resonanzen der Bewegungsgeschwindigkeit mit der Gitterkonstanten eingestellt wird, bei denen das Frequenzsignal zusammenbricht.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäßen Ortsfiltermessanordnung bzw. einer erfindungsgemäßen Ortsfiltermessvorrichtung,
- Fig. 2a) - 2c): eine schematische Darstellung eines Steuerungsprinzips eines Spiegelarrays,
- Fig. 3a) - 3f): mehrere Beispiele erfindungsgemäß einstellbarer Gitterstrukturen,
- Fig. 4: eine schematische Darstellung einer ersten Anordnung zur Nutzung eines Spiegelarrays mit mehreren Sektionen und
- Fig. 5: eine schematische Darstellung einer weiteren Anordnung zur Nutzung eines Mikrospiegelarrays mit verschiedenen Sektionen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

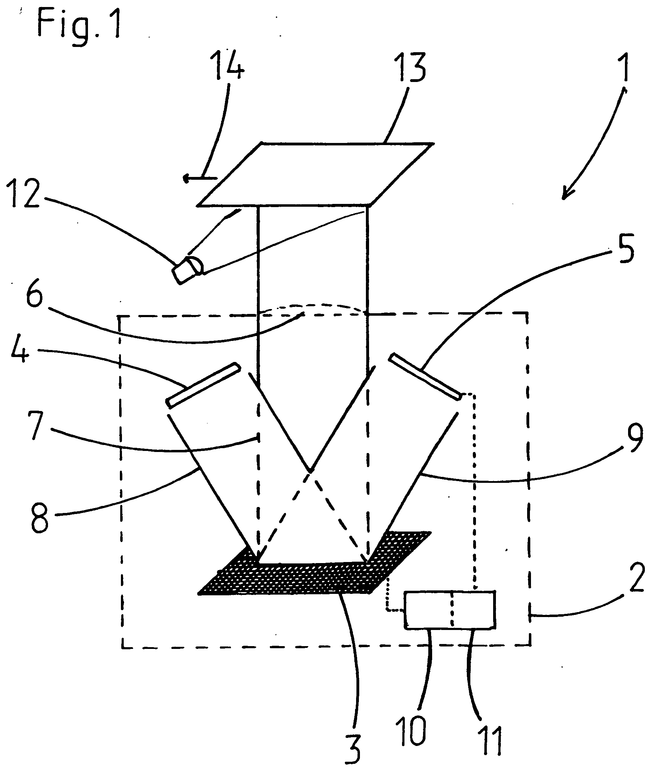

In Fig. 1 ist eine Ortsfiltermessanordnung 1 bzw. eine Ortsfiltermessvorrichtung 2 schematisch dargestellt. Die Ortsfiltermessvorrichtung 2 hat gegenüber der Ortsfiltermessanordnung 1 ein mit einer gestrichelten Linie angedeutetes Gehäuse, das die entsprechenden Komponenten der Ortsfiltermessanordnung 1 umschließt.

Die Ortsfiltermessanordnung 1 umfasst ein Spiegelarray 3, das insbesondere in Form eines Mikrospiegelarrays 3 mit Spiegelelementen, deren Kantenlängen im µm-Bereich sind, sowie zwei symmetrisch angeordneten Photodioden 4 und 5. Die Photodioden 4 und 5 sind flächige, nicht segmentierte optische Sensoren. An ihrer Stelle können auch andere, insbesondere segmentierte optische Sensoren, beispielsweise Zeilensensoren oder Sensormatrizes verwendet werden.

Die Ortsfiltermessanordnung 1 umfasst weiter eine Steuervorrichtung 10 und eine Auswertevorrichtung 11, die, schematisch angedeutet, auch in einer gemeinsamen Vorrichtung, beispielsweise einer Datenverarbeitungsanlage, realisiert sein können. Bei sehr schnellen Signalen der Photodioden 4 und 5 kann jedoch die Auswertevorrichtung aus Geschwindigkeitsgründen auch Hardware-basiert sein, während die Steuervorrichtung 10 Software-implementiert sein kann. Mit gestrichelten Signalleitungen ist dargestellt, dass die Steuervorrichtung 10 die Stellung der Spiegelelemente des Spiegelarrays 3 steuert, während die Auswertevorrichtung 11 Signale von der Photodiode 5 und, aus Gründen der Übersichtlichkeit nicht dargestellt, von der Photodiode 4, erhält.

Die Ortsfiltermessanordnung 1 empfängt Licht, das von einer bewegten Objektoberfläche 13 eines Messobjekts ausgeht. In Fig. 1 ist dies so dargestellt, dass das Licht von einer Lichtquelle 12 ausgeht und von der bewegten Objektoberfläche 13 reflektiert wird. Die Bewegungsrichtung des bewegten Objekts ist mit einem Pfeil 14 angedeutet. Das von der Objektoberfläche 13 reflektierte Licht fällt ggf. durch ein optisches Element 6 der Ortsfiltermessanordnung 1 auf das Spiegelarray 3 bzw. eine Spiegelmatrix, von wo aus das Licht je nach der Winkelstellung der Spiegelelemente des Spiegelarrays 3 zur Photodiode 4 oder zur Photodiode 5 hin abgelenkt bzw. reflektiert wird.

Der zentrale Strahlengang ist mit dem Bezugszeichen 7 gekennzeichnet, die reflektierten Strahlengänge 8 und 9 bilden die Fortsetzung des Strahlengangs 7 nach der Reflexion vom Spiegelarray 3 zu den Photodioden 4 bzw. 5. Vorzugsweise ist bereits der Strahlengang 7 ein paralleler Strahlengang. Das optische Element 6 kann daher ein Linsensystem sein, das einen parallelen Strahlengang erzeugt, oder ein Kollimator oder eine Abfolge von Kollimatoren. Es kann sich auch um eine telezentrische Optik handeln, die vergleichsweise viel Licht durchlässt, während nur achsparallele Strahlenbündel vom Objekt in die Ortsfiltermessanordnung 1 eindringen. Eine telezentrische Optik hat auch eine vorteilhafte große Schärfentiefe.

Mit der in Fig. 1 gezeigten Anordnung kann eine Differenzmessung mit vergleichsweise großem Signal-zu-Rauschen-Verhältnis durchgeführt werden, da das von der Objektoberfläche 13 auf das Spiegelarray 3 fallende Licht vollständig auf die Photodioden 4 und 5 gelenkt wird und das Signal, das bei der Photodiode 4 ankommt, das Negativ des Signals ist, das bei der Photodiode 5 ankommt.

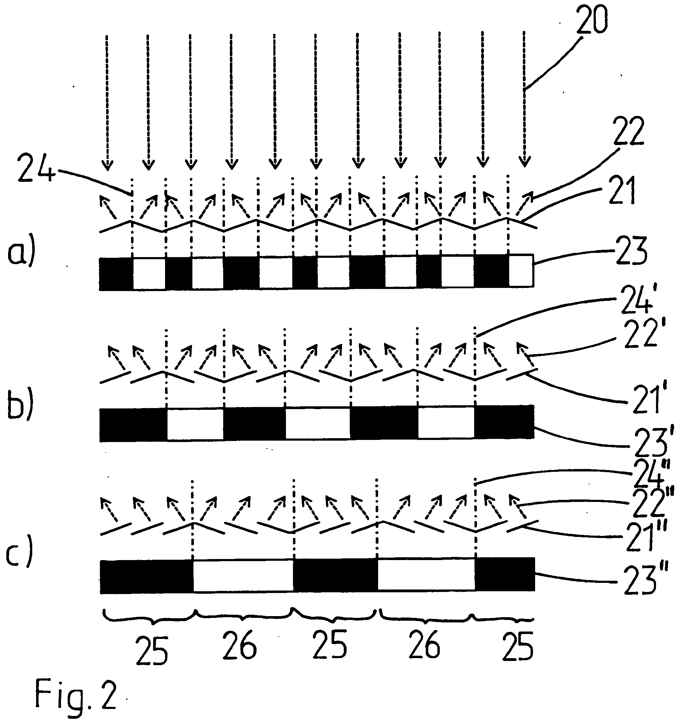

In Fig. 2 ist schematisch in einer Schnittdarstellung durch ein Spiegelarray 3 die Funktionsweise des Spiegelarrays 3 als Ortsfilter in einer einfachen Anwendung dargestellt. In den Figurenteilen a), b) und c) sind drei Beispiele mit jeweils größerer Gitterperiode dargestellt. Von oben fällt ein paralleles Lichtbündel 20 ein, das jeweils auf die Spiegel 21, 21' und 21" in Fig. 2a), 2b) bzw. 2c) trifft. Die Spiegelelemente 21, 21' und 21" nehmen jeweils eine geneigte Position ein, wobei sie das von oben einfallende Licht entweder nach links oben oder nach rechts oben wieder reflektieren. Die Reflexionsrichtungen sind mit den Bezugszeichen 22, 22' und 22" gekennzeichnet.

In Fig. 2a) ist die Situation dargestellt, in der jeweils zwei benachbarte Spiegelelemente 21 jeweils unterschiedliche Stellungen innehaben. Dadurch bildet jedes einzelne Spiegelelement 21 eine Zone des Gitters, die abwechselnd für beispielsweise die Photodiode 5 aus Fig. 1 dunkel ist oder hell, wie dies in den Balken mit dem Bezugszeichen 23 dargestellt ist. Die strichpunktierten Linien 24 zeigen die Zonengrenzen an, die mit den Enden bzw. Kanten der Spiegelelemente 21, 21' und 21" übereinstimmen. Fig. 2a) stellt daher die kleinste erreichbare Gitterkonstante bzw. den kleinsten erreichbaren Gitterparameter dar, der durch Periodizität der Spiegelelemente des Spiegelarrays 3 vorgegeben ist.

In Fig. 2b) ist eine Situation mit verdoppelter Gitterkonstante dargestellt, da jeweils Paare zweier benachbarter Spiegelelemente 21' in der gleichen Richtung 22' ausgerichtet sind und sich darin von dem benachbarten Zweier-Paar von Spiegelelementen 21' unterscheidet. Die Zonen 23' der Gitterstruktur sind somit doppel so breit wie die Zonen 23, die in Fig. 2a) dargestellt sind.

In Fig. 2c) ist die Gitterkonstante bzw. der Gitterparameter um eine weitere Spiegelelementbreite vergrößert worden. Die Zonen 23" sind daher dreimal so breit wie die Zonen 23' aus Fig. 2a). Unterhalb von Fig. 2c) ist außerdem dargestellt, dass die jeweils nach links verkippten Spiegelelemente 21" aus mehreren Zonen eine Menge 25 von Spiegelelementen darstellen, die sämtlich von oben einfallendes Licht 20 in eine Richtung, d.h. auf einen Sensor hin, reflektieren, während die nach rechts geneigten Spiegelelemente 21" aus den übrigen Zonen eine zweite Menge 26 von Spiegelelementen 21" darstellen, die das einfallende Licht 20 in die andere Richtung, d.h. vom ersten Sensor weg und ggf. auf einen zweiten Sensor hin, reflektieren.

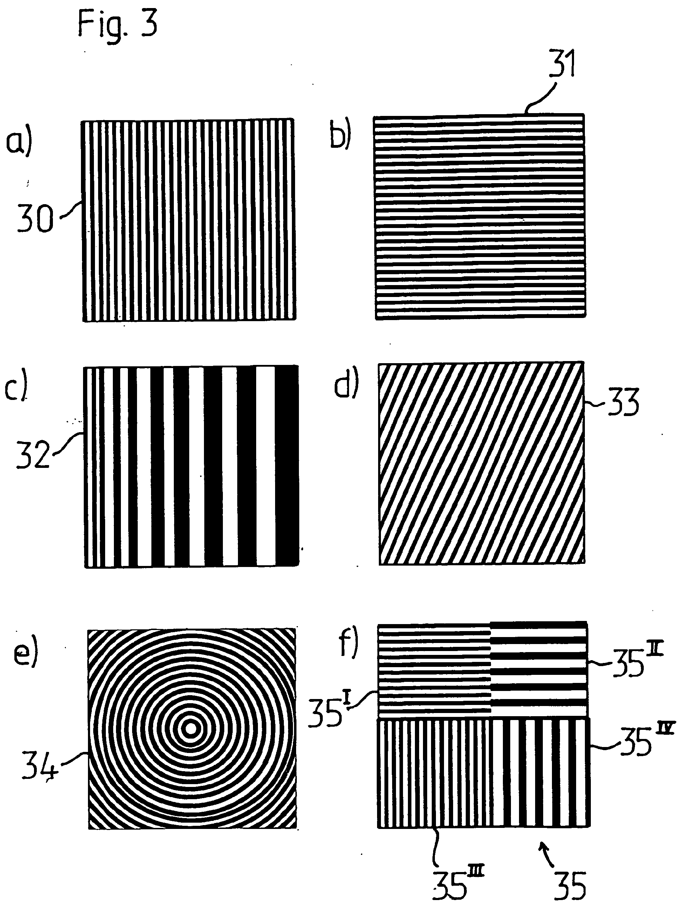

In Fig. 3 sind mehrere verschiedene Gitterstrukturen schematisch dargestellt. So ist in Fig. 3a) ein regelmäßiges Liniengitter 30 mit vertikalen Gitterlinien dargestellt. Eine Ortsfrequenzmessung mit der Gitterstruktur 30 ergibt eine Messung einer Bewegungskomponente in waagerechter Richtung. In Fig. 3b) ist der umgekehrte Fall eines regelmäßigen Liniengitters 31 mit horizontalen Gitterlinien dargestellt, der zu einer Messung einer vertikalen Bewegungskomponente führt.

In Fig. 3c) ist ein so genanntes Chirp-Gitter 32 dargestellt, das vertikale Gitterlinien aufweist, deren Abstand und Breite sich von links nach rechts vergrößert. Ein solches Chirp-Gitter 32 dient etwa der Messung der Größe von bewegten Teilchen.

In Fig. 3d) ist ein lineares Gitter 33 mit schräggestellten Gitterlinien dargestellt. Das Gitter 33 kann auch eine Momentaufnahme eines sich kontinuierlich drehenden linearen Gitters sein, das eine Übergangsform der Gitter 30 und 31 aus Fig. 3a) und Fig. 3b) darstellt.

In Fig. 3e) ist ein Kreisgitter 34 mit einem konstanten Gitterparameter dargestellt. Dieses Kreisgitter 34 kann beispielsweise dazu verwendet werden, ein Rotationszentrum einer rotierenden Bewegung festzustellen.

In Fig. 3f) ist eine zusammengesetzte Gitterstruktur 35 mit vier Sektionen 35^{I} bis 35^{IV} dargestellt. Die Sektionen 35^{I} und 35^{II} weisen regelmäßige Liniengitter mit waagerechten Gitterlinien und unterschiedlichen Gitterparametern auf, während die Sektionen 35^{III} und 35^{IV} ebenfalls regelmäßige Liniengitter mit vertikalen Gitterlinien mit unterschiedlichen Gitterparametern aufweisen. Mit dieser Auswahl der Gitterparameter werden Mehrdeutigkeiten bei der Geschwindigkeitsbestimmung in den verschiedenen Bewegungskomponenten vermieden.

Es ist auch möglich, in einzelnen Sektionen der Gitterstruktur 35 weitere unabhängige Gitterstrukturen vorzusehen, beispielsweise ein Kreisgitter 34, ein Chirp-Gitter 32 oder ein Gitter, das aus einem Liniengitter besteht, dessen Ausrichtung und/oder Gitterparameter sich kontinuierlich verändern. Auf diese Weise sind mittels eines einzelnen Spiegelarrays 35 durch die Ausbildung von Sektionen 35^{I} bis 35^{IV} mit verschiedenen Gitterstrukturen gleichzeitig verschiedene Messungen möglich. Die Anzahl und Anordnung von verschiedenen Sektionen ist hier nur beispielhaft gewählt und dargestellt. Es können auch mehr oder weniger Sektionen in unterschiedlichen Anordnungen gewählt werden.

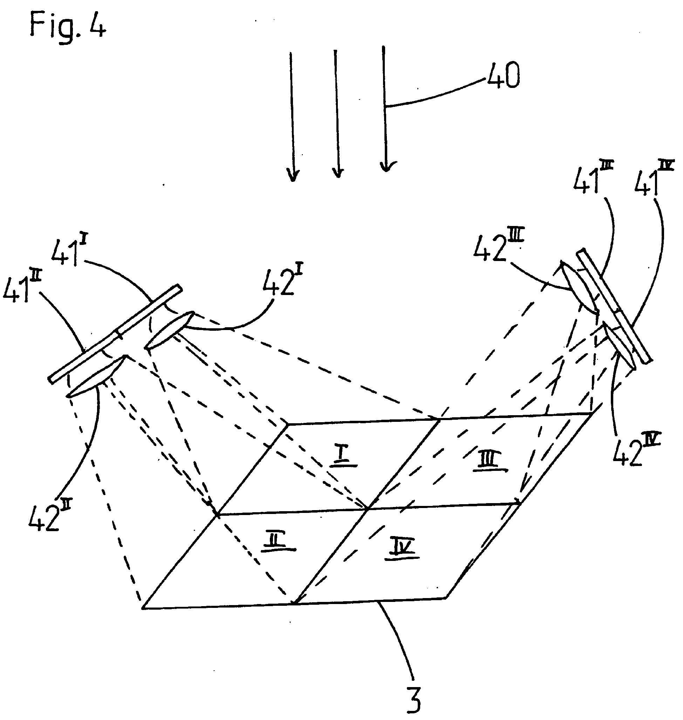

In Fig. 4 ist schematisch eine erfindungsgemäße Variante einer Ortsfiltermessanordnung unter Benutzung eines Spiegelarrays 3 mit mehreren Sektionen I bis IV dargestellt. Es sind vier Photodioden 41^{I} bis 41^{IV} dargestellt, die jeweils auf das Spiegelarray 3 ausgerichtet sind. Jeder einzelnen Photodiode 41^{I} bis 41^{IV} ist eine eigene Optik 42^{IV} bis 42^{IV} zugeordnet, deren Fokussiereigenschaften so sind, dass jeder der Sensoren 41^{I} bis 41^{IV} jeweils nur einen Sektor I - IV des Spiegelarrays 3 im Blick hat. Dadurch werden vier gleichzeitige und voneinander unabhängige Messungen erzielt.

In Fig. 4 ist dargestellt, wie ein einfallendes Lichtbündel 40, das auf das Spiegelarray 3 trifft und von dort zu den Sensoren 42^{IV} bis 42^{IV} reflektiert wird. Die Sensoren sind in zwei Gruppen angeordnet, nämlich zwei Sensoren 41^{I} und 41" auf einer Seite und 41^{III} und 41^{IV} auf der gegenüberliegenden Seite. In dieser Anordnung reicht es aus, wenn die Spiegelelemente des Spiegelarrays 3 über die gesamte Fläche des Spiegelelements 3 insgesamt auf entweder die beiden Sensoren 41^{I} und 41" einerseits und in einer anderen Winkelposition auf die Sensoren 41^{III} und 41^{IV} ausgerichtet sind. Eine quasi stufenlose Einstellung der Winkelpositionen der Spiegelelemente ist nicht notwendig. Die Selektion erfolgt durch die vorgeschalteten Optiken 42^{I} bis 42^{IV} der Sensoren.

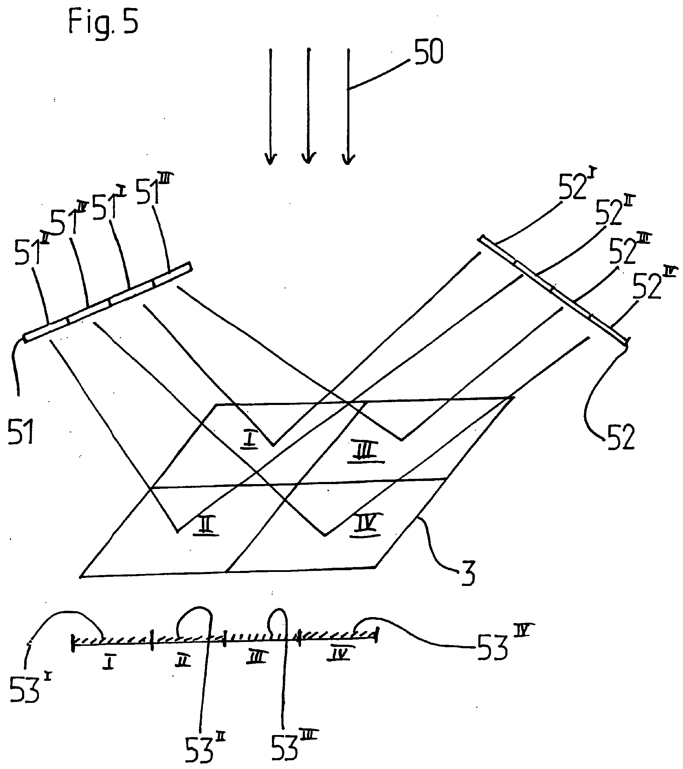

In Fig. 5 ist eine alternative Version zu Fig. 4 dargestellt. Demnach trifft in Fig. 5 ein paralleles Lichtbündel 50, das von einem Messobjekt ausgeht, auf das Mikrospiegelarray 3, das in vier Sektionen I bis IV unterteilt ist, in denen verschiedene Gittermuster oder Gitterstrukturen erzeugt werden. Beidseitig des einfallenden Lichtbündels 50 sind segmentierte Sensoren 51 und 52 angeordnet, die jeweils Segmente 51^{I} bis 51^{IV} und 52' bis 52^{IV} aufweisen.

Die Spiegelelemente des Spiegelarrays 3 sind in diesem Fall so einstellbar, dass in den verschiedenen Sektionen gezielt die Flächen der Segmente 51^{I} bis 51^{IV} einerseits und 52^{I} bis 52^{IV} anvisiert werden. Hierfür ist vorteilhafterweise die Winkeleinstellung der Spiegelelemente individuell und stufenlos oder quasi stufenlos einstellbar. Die verschiedenen Segmente der segmentierten Sensoren 51 und 52 empfangen in diesem Ausführungsbeispiel komplementäre Signale, d.h. dass beispielsweise das Signal am Segment 52^{I} das Negativ des Signals am Segment 51^{I} ist.

Im unteren Teil der Fig. 5 ist eine Reihe von Spiegelelementen in den Sektionen I-IV schematisch im Querschnitt dargestellt. Hier ist zu sehen, dass bei jeweils gleicher Ausrichtung der Spiegelelemente in einer Sektion die tatsächliche Winkelausrichtung 53^{I} bis 53^{IV} in den einzelnen Sektionen I bis IV sich unterscheiden, um die entsprechenden Segmente der Sensoren 51 und 52 anzusteuern.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Ortsfiltermessanordnung
- 2: Ortsfiltermessvorrichtung
- 3: Mikrospiegelarray
- 4, 5: Photodiode
- 6: optisches Element
- 7: zentraler Strahlengang
- 8, 9: reflektierte Strahlengänge
- 10: Steuervorrichtung
- 11: Auswertevorrichtung
- 12: Lichtquelle
- 13: bewegte Objektoberfläche
- 14: Bewegungsrichtung
- 20: einfallendes Licht
- 21 - 21": Spiegelelemente
- 22 - 22": Reflexionsrichtung
- 23 - 23": Zonen mit gleich ausgerichteten Spiegelelementen
- 24 - 24": Zonengrenzen
- 25: erste Menge von Spiegelelementen
- 26: zweite Menge von Spiegelelementen
- 30: Gitter mit vertikalen Streifen
- 31: Gitter mit horizontalen Streifen
- 32: Chirp-Gitter mit vertikalen Streifen
- 33: Gitter mit geneigten Streifen
- 34: Kreisgitter
- 35: sektioniertes Gitter
- 35^{I} - 35^{IV}: Sektionen eines sektionierten Gitters
- 40: einfallendes Licht
- 41^{I} - 41^{IV}: Photodiode
- 42^{I} - 42^{IV}: optische Elemente
- 50: einfallendes Licht
- 51: segmentierte Photodiode
- 51^{I} - 51^{IV}: Segment
- 52: segmentierte Photodiode
- 52^{I} - 52^{IV}: Segment
- 53^{I} - 53^{IV}: Stellung der Spiegelelemente
- I - IV: Sektionen des Spiegelarrays

## Patentansprüche

1. Ortsfiltermessanordnung (1) mit wenigstens einem Sensor (4, 5; 41^{I} - 41^{IV}; 51, 52) und einem Ortsfilter, wobei von einem an dem Ortsfilter vorbeibewegten Messobjekt (13) ausgestrahlte oder reflektierte elektromagnetische Strahlung, Insbesondere Licht, Ober den Ortsfilter auf den Sensor (4, 5; 41I - 41IV; 51, 52) abgebildet wird, wobei eine zeitliche Modulation der elektromagnetischen Strahlung zur Messung einer oder mehrerer Eigenschaften des bewegten Messobjekts (13) erfasst wird, wobei
das Ortsfilter als Spiegelarray (3), insbesondere als Mikrospiegelarray, ausgebildet ist, **dadurch gekennzeichnet, dass** das Spiegelarray (3) bewegliche Spiegelelemente (21 - 21"') zur Erzeugung einer Gitterstruktur (30 - 35) aufweist.

2. Ortsfiltermessanordnung (1) nach Anspruch 1, **dadurch gekennzeichnet, dass** eine Steuervorrichtung (10) zur Steuerung der Bewegung der Spiegelelemente (21 - 21"') und/oder eine Auswertevorrichtung (11) zur Auswertung von Signalen des wenigstens einen optischen Sensors (4, 5; 41^{I}- 41^{IV}; 51, 52) vorgesehen ist.

3. Ortsfiltermessanordnung (1) nach Anspruch 1 oder 2, **dadurch gekennzeichnet, dass** der wenigstens eine Sensor (4, 5; 41^{I} - 41^{IV}, 51, 52) eine Photodiode, ein Phototransistor, eine segmentierte Photodiode, eine Photodiodenzeile oder eine Phototransistorzeile, eine Photodiodenmatrix oder eine Phototransistormatrix, ein CCD-Array oder ein CMOS-Array ist und/oder dass wenigstens ein optisches Element (6; 42^{I} - 42^{IV}), insbesondere eine optische Linse, eine Linsenanordnung und/oder ein Kollimator, in einem Strahlengang (7) der elektromagnetischen Strahlung vorgesehen ist.

4. Ortsfiltermessanordnung (1) nach einem der Ansprüche 1 bis 3, **dadurch gekennzeichnet, dass** eine Mehrzahl von Sensoren (4, 5; 41^{I} - 41^{IV}; 51, 52) oder wenigstens ein Sensor (51, 52) mit mehreren Segmenten (51^{I} - 51^{IV}; 52^{I} - 52^{IV}) vorgesehen ist, wobei jeder Sensor (4, 5; 41^{I} - 41^{IV}; 51, 52) oder jedes Sensorsegment (51^{I} - 51^{IV}; 52^{I} - 52^{IV}), insbesondere mittels vorgeschalteter optischer Elemente (42^{I} - 42^{IV}), nur eine Sektion (I - IV; 35^{I} - 35 ^{IV}) des Spiegelarrays (3, 35) im Sichtfeld hat.

5. Ortsfiltermessanordnung (1) nach einem der Ansprüche 1 bis 4, **dadurch gekennzeichnet, dass** die Spiegelelemente (21 - 21") des Spiegelarrays (3, 35) in wenigstens zwei verschiedenen Richtungen zwischen jeweils wenigstens zwei festen Winkelpositionen bewegbar sind oder dass die Spiegelelemente (21 - 21") des Spiegelarrays (3) in wenigstens zwei verschiedenen Richtungen in ihren jeweiligen Winkelstellungen stufenlos oder quasi stufenlos bewegbar sind.

6. Ortsfiltermessanordnung (1) nach einem der Ansprüche 1 bis 5, **dadurch gekennzeichnet, dass** wenigstens zwei Sensoren (4, 5; 41^{I} - 41^{IV}; 51, 52) vorgesehen sind, die von Spiegelelementen (21 - 21") des Spiegelarrays (3; 35) ansteuerbar sind, wobei bei Einstellung einer Gitterstruktur (30 - 35) durch eine Auswahl oder Festlegung von Winkelstellungen (53^{I} - 53^{IV}) der Spiegelelemente (21 - 21") des Spiegelarrays (3; 35) ein Sensor (4; 41^{I} - 41^{II}; 51) elektromagnetische Strahlung von einer ersten Menge (25) von Spiegelelementen (21 - 21") mit einer ersten Winkelstellung empfängt und ein anderer Sensor (5; 41^{III} - 41^{IV}; 52) elektromagnetische Strahlung von einer zweiten Menge (26) von Spiegelelementen (21 - 21") mit einer zweiten Winkelstellung empfängt, wobei die erste Menge (25) und die zweite Menge (26) von Spiegelelementen (21 - 21") aus wenigstens einer Sektion (I - IV) des Spiegelarrays (3) ausgewählt sind und in Bezug auf die wenigstens zwei Sensoren (4, 5; 41^{I} - 41^{IV}; 51, 52) ein Positiv und ein Negativ einer Gitterstruktur (30 - 35) zueinander bilden.

7. Verwendung eines Spiegelarrays (3), insbesondere eines Mikrospiegelarrays, als Ortsfilter in einer Ortsfiltermessanordnung (1), wobei das Spiegelarray (3) bewegliche Spiegelelemente (21 - 21"') zur Erzeugung einer Gitterstrutktur (30 - 35) aufweist, wobei von einem an dem Ortsfilter vorbeibewegten Messobjekt (13) ausgestrahlte oder reflektierte elektromagnetische Strahlung, insbesondere Licht, über den Ortsfilter auf den Sensor (4, 5; 41^{I} - 41^{IV}; 51, 52) abgebildet wird, und wobei über eine zeitliche Modulation der elektromagnetischen Strahlung eine oder mehrere Eigenschaften des bewegten Messobjekts (13) gemessen werden.

8. Verwendung einer Ortsfiltermessanordnung (1) nach einem der Ansprüche 1 bis 6 zur Messung einer Geschwindigkeit, einer Bewegungsrichtung, einer Teilchengröße und/oder einer Oberflächenbeschaffenheit eines Messobjekts (13).

9. Verfahren zur Ortsfiltermessung, wobei von einem an einem Ortsfilter vorbeibewegten Messobjekt (13) ausgestrahlte oder reflektierte elektromagnetische Strahlung (7), insbesondere Licht, über den als Spiegelarray (3), insbesondere Mikrospiegelarray, mit beweglichen Spiegelelementen (21 - 21") ausgebildeten Ortsfilter auf wenigstens einen Sensor (4, 5; 41^{I} - 41^{IV}; 51, 52) abgebildet wird, wobei die beweglichen Spiegelelemente (21 - 21") des Spiegelarrays (3; 35) hinsichtlich ihrer Winkelstellung derart eingestellt werden, dass durch die örtliche Verteilung der Winkelstellungen der Spiegelelemente (21 - 21") des Spiegelarrays (3; 35) das Ortsfilter mit einer Gitterstruktur (30 - 35) erzeugt wird, und wobei über eine zeitliche Modulation der elektromagnetischen Strahlung eine oder mehrere Eigenschaften des bewegten Messobjekts (13) gemessen werden.

10. Verfahren nach Anspruch 9, **dadurch gekennzeichnet, dass** als Gitterstruktur (30 - 35) ein regelmäßiges Liniengitter (30, 31, 33), ein Chirp-Gitter (32) mit in einer Richtung sich verändernder Gitterkonstante oder ein Ringgitter (34) eingestellt wird.

11. Verfahren nach Anspruch 9 oder 10, **dadurch gekennzeichnet, dass** das Spiegelarray (3; 35) in verschiedene Sektionen (I - IV) aufgeteilt wird, in denen jeweils verschiedene Gitterstrukturen (35^{I} - 35^{IV}) oder Gitter mit verschiedenen Eigenschaften, insbesondere Ausrichtung und/oder Gitterkonstante des Gitters, eingestellt werden.

12. Verfahren nach einem der Ansprüche 9 bis 11, **dadurch gekennzeichnet, dass** die eingestellte Gitterstruktur (30 - 35) während einer Messung verändert wird, wobei die Ausrichtung und/oder die Gitterkonstante der Gitterstruktur (30 - 35) verändert werden kann und/oder die Gitterstruktur (30 - 35) im Verlauf einer Messung rotiert werden kann.

13. Verfahren nach einem der Ansprüche 9 bis 12, **dadurch gekennzeichnet, dass** mit einem Spiegelarray (3; 35), deren Spiegelelemente (21 - 21") in ihren Winkelstellungen stufenlos oder quasi stufenlos bewegbar sind, und dabei entweder in verschiedenen Sektionen (I - IV) des Spiegelarrays (3; 35) verschiedene Sensoren (4, 5; 41^{I} - 41^{IV}; 51, 52) angesteuert werden oder durch eine Einstellung der Winkelstellungen optische Korrekturen und/oder Fokussierungen vorgenommen werden.

14. Verfahren nach einem der Ansprüche 9 bis 13, **dadurch gekennzeichnet, dass** wenigstens zwei verschiedene Sensoren (4, 5; 41^{I} - 41^{IV}; 51, 52) mit Spiegelelementen (21 - 21") in verschiedenen Winkelstellungen angesteuert werden, wobei die durch die Verteilung der Spiegelelemente (21 - 21") erzeugte Gitterstruktur (30 - 35) in Bezug auf einen Sensor (4; 41^{I} - 41"; 51) das Negativ der Gitterstruktur in Bezug auf den anderen Sensor (5; 41^{III} - 41^{IV}; 52) ist.

15. Verfahren nach einem der Ansprüche 9 bis 14, dass zu Beginn einer Messung automatisch an ein Messobjekt (13), und/oder ein Messziel angepasste Gitterparameter, insbesondere für ein optimiertes Signal-zu-Rauschen-Verhältnis, gesucht und eingestellt werden.

## Claims

1. Spatial filter measurement arrangement (1) having at least one sensor (4, 5; 41^{I}-41^{IV}; 51, 52) and a spatial filter, wherein electromagnetic radiation, in particular light, which is transmitted or reflected by a measurement object (13) which is moved past the spatial filter is imaged on the sensor (4, 5; 41^{I}-41^{IV}; 51, 52) by means of the spatial filter, wherein a time modulation of the electromagnetic radiation is detected in order to measure one or more properties of the moving measurement object (13), wherein the spatial filter is constructed as a mirror array (3), in particular as a micromirror array, **characterised in that** the mirror array (3) has movable mirror elements (21-21"') for producing a grid structure (30-35).

2. Spatial filter measurement arrangement (1) according to claim 1, **characterised in that** a control device (10) is provided for controlling the movement of the mirror elements (21-21"') and/or an evaluation device (11) for evaluating signals of the at least one optical sensor (4, 5; 41^{I}-41^{IV}; 51, 52).

3. Spatial filter measurement arrangement (1) according to claim 1 or claim 2, **characterised in that** the at least one sensor (4, 5; 41^{I}-41^{IV}; 51, 52) is a photodiode, a phototransistor, a segmented photodiode, a photodiode line or a phototransistor line, a photodiode matrix or a phototransistor matrix, a CCD array or a CMOS array, and/or in that at least one optical element (6; 42^{I}-42^{IV}), in particular an optical lens, a lens arrangement and/or a collimator, is provided in a beam path (7) of the electromagnetic radiation.

4. Spatial filter measurement arrangement (1) according to any one of claims 1 to 3, **characterised in that** there are provided a plurality of sensors (4, 5; 41^{I}-41^{IV}; 51, 52) or at least one sensor (51, 52) having a plurality of segments (51^{I}-51^{IV}; 52^{I}-52^{IV}), wherein each sensor (4, 5; 41^{I}-41^{IV}; 51, 52) or each sensor segment (51^{I}-51^{IV}; 52^{I}-52^{IV}) has only a section (I-IV; 35^{I}-35^{IV}) of the mirror array (3, 35) in the viewing field, in particular by means of upstream optical elements (42^{I}-42^{IV}).

5. Spatial filter measurement arrangement (1) according to any one of claims 1 to 4, **characterised in that** the mirror elements (21-21") of the mirror array (3, 35) can be moved in at least two different directions between at least two fixed angular positions, or **in that** the mirror elements (21-21") of the mirror array (3) can be moved in at least two different directions in their respective angular positions in a stepless or quasi stepless manner.

6. Spatial filter measurement arrangement (1) according to any one of claims 1 to 5, **characterised in that** there are provided at least two sensors (4, 5; 41^{I}-41^{IV}; 51, 52) which can be controlled by mirror elements (21-21") of the mirror array (3; 35), wherein, when a grid structure (30-35) is adjusted by a selection or fixing of angular positions (53^{I}-53^{IV}) of the mirror elements (21-21") of the mirror array (3; 35), a sensor (4; 41^{I}-41^{II}; 51) receives electromagnetic radiation from a first quantity (25) of mirror elements (21-21") having a first angular position, and another sensor (5; 41^{III}-41^{IV}; 52) receives electromagnetic radiation from a second quantity (26) of mirror elements (21-21") having a second angular position, wherein the first quantity (25) and the second quantity (26) of mirror elements (21-21") are selected from at least one section (I-IV) of the mirror array (3) and form a positive and a negative of a grid structure (30-35) relative to each other in relation to the at least two sensors (4, 5; 41^{I}-41^{IV}; 51, 52).

7. Use of a mirror array (3), in particular a micromirror array, as a spatial filter in a spatial filter measurement arrangement (1), wherein the mirror array (3) has movable mirror elements (21-21"') for producing a grid structure (30-35), wherein electromagnetic radiation, in particular light, which is transmitted or reflected by a measurement object (13) which is moved past the spatial filter is imaged on the sensor (4, 5; 41^{I}-41^{IV}; 51, 52) by means of the spatial filter, and wherein one or more properties of the moving measurement object (13) are measured by means of a time modulation of the electromagnetic radiation.

8. Use of a spatial filter measurement arrangement (1) according to any one of claims 1 to 6 to measure a speed, a movement direction, a particle size and/or a surface quality of a measurement object (13).

9. Method for spatial filter measurement, wherein electromagnetic radiation (7), in particular light, which is transmitted or reflected by a measurement object (13) which is moved past a spatial filter is imaged on at least one sensor (4, 5; 41^{I}-41^{IV}; 51, 52) by means of the spatial filter which is constructed as a mirror array (3), in particular micromirror array, having movable mirror elements (21-21"), wherein the movable mirror elements (21-21") of the mirror array (3; 35) are adjusted with respect to the angular position thereof so that the spatial filter is produced with a grid structure (30-35) as a result of the spatial distribution of the angular positions of the mirror elements (21-21") of the mirror array (3; 35), and wherein one or more properties of the moving measurement object (13) are measured by means of a time modulation of the electromagnetic radiation.

10. Method according to claim 9, **characterised in that** there is produced as a grid structure (30-35) a regular line grid (30, 31, 33), a chirp grid (32) having a grid constant which changes in one direction, or a ring grid (34).

11. Method according to claim 9 or claim 10, **characterised in that** the mirror array (3; 35) is divided into different sections (I-IV), in which different grid structures (35^{I}-35^{IV}) or grids having different properties, in particular orientation and/or grid constant of the grid, are produced.

12. Method according to any one of claims 9 to 11, **characterised in that** the adjusted grid structure (30-35) is changed during a measurement, wherein the orientation and/or the grid constant of the grid structure (30-35) can be changed and/or the grid structure (30-35) can be rotated in the course of a measurement.

13. Method according to any one of claims 9 to 12, **characterised in that**, using a mirror array (3, 35) whose mirror elements (21-21") can be moved in terms of the angular positions thereof in a stepless or quasi stepless manner, and in this instance either different sensors (4, 5; 41^{I}-41^{IV}; 51, 52) are controlled in different sections (I-IV) of the mirror array (3; 35) or optical corrections and/or focusing operations are carried out by an adjustment of the angular positions.

14. Method according to any one of claims 9 to 13, **characterised in that** at least two different sensors (4, 5; 41^{I}-41^{IV}; 51, 52) are controlled with mirror elements (21-21") in different angular positions, wherein the grid structure (30-35) which is produced by the distribution of the mirror elements (21-21") in relation to one sensor (4; 41^{I}-41^{II}; 51) is the negative of the grid structure in relation to the other sensor (5; 41^{III}-41^{IV}; 52).

15. Method according to any one of claims 9 to 14, **characterised in that**, at the beginning of a measurement, grid parameters which are automatically adapted to a measurement object (13) and/or a measurement target are sought and adjusted, in particular for an optimised signal-to-noise ratio.

## Revendications

1. Arrangement de mesure par filtre de position (1) avec au moins un capteur (4, 5 ; 41^{I} - 41^{IV}); 51, 52) et un filtre de position, le rayonnement électromagnétique, en particulier de la lumière, rayonné ou réfléchi par un objet de mesure (13) déplacé devant le filtre de position étant reproduit par le biais du filtre de position sur le capteur (4, 5 ; 41^{I} - 41^{IV}; 51, 52), une modulation temporelle du rayonnement électromagnétique étant captée pour la mesure d'une ou de plusieurs caractéristiques de l'objet de mesure (13) déplacé, le filtre de position étant constitué en tant que réseau de miroirs (3), en particulier en tant que micro-réseau de miroirs,
**caractérisé en ce que** le réseau de miroirs (3) présente des éléments de miroirs (21 - 21"') mobiles pour la production d'une structure de grille (30 - 35).

2. Arrangement de mesure par filtre de position (1) selon la revendication 1, **caractérisé en ce qu'**il est prévu un dispositif de commande (10) pour la commande du mouvement des éléments de miroirs (21 - 21"') et/ou un dispositif d'analyse (11) pour l'analyse de signaux du capteur (4, 5 ; 41^{I} - 41^{IV}; 51, 52) optique au moins au nombre de un.

3. Arrangement de mesure par filtre de position (1) selon la revendication 1 ou 2, **caractérisé en ce que** le capteur (4, 5 ; 41^{I} - 41^{IV} ; 51, 52) au moins au nombre de un est une photodiode, un phototransistor, une photodiode segmentée, une ligne de photodiodes ou une ligne de phototransistors, une matrice de photodiodes ou une matrice de phototransistors, un réseau CCD ou un réseau CMOS et/ou **en ce qu'**au moins un élément optique (6 ; 42^{I} - 42^{IV}), en particulier une lentille optique, un arrangement de lentilles et/ou un collimateur, est prévu dans une trajectoire de rayons (7) du rayonnement électromagnétique.

4. Arrangement de mesure par filtre de position (1) selon l'une des revendications 1 à 3, **caractérisé en ce qu'**une pluralité de capteurs (4, 5 ; 41^{I} - 41^{IV}; 51, 52) ou au moins un capteur (51, 52) avec plusieurs segments (51^{I} - 51^{IV} ; 52^{I} - 52^{IV}) est prévu(e), chaque capteur (4, 5 ; 41^{I} - 41^{IV}; 51, 52) ou chaque segment de capteur (51^{I} - 51^{IV}) ; 52^{I} - 52^{IV}) n'ayant dans le champ de vision qu'une section (I - IV ; 35^{I} - 35^{IV}) du réseau de miroirs (3; 35), en particulier au moyen d'éléments (42^{I} - 42^{IV}) optiques montés en amont.

5. Arrangement de mesure par filtre de position (1) selon l'une des revendications 1 à 4, **caractérisé en ce que** les éléments de miroirs (21 - 21") du réseau de miroirs (3; 35) sont mobiles dans au moins deux directions différentes entre respectivement au moins deux positions angulaires fixes ou en ce que les éléments de miroirs (21 - 21") du réseau de miroirs (3) sont mobiles en continu ou quasi en continu dans au moins deux directions différentes dans leurs positions angulaires respectives.

6. Arrangement de mesure par filtre de position (1) selon l'une des revendications 1 à 5, **caractérisé en ce qu'**il est prévu au moins deux capteurs (4, 5 ; 41^{I} - 41^{IV}; 51, 52) qui peuvent être pilotés par des éléments de miroirs (21 - 21") du réseau de miroirs (3; 35), un capteur (4; 41^{I} - 41^{II} ; 51) recevant, lors du réglage d'une structure de grille (30 - 35) par une sélection ou une stipulation de positions angulaires (53^{I} - 53^{IV}) des éléments de miroirs (21 - 21") du réseau de miroirs (3; 35), un rayonnement électromagnétique d'une première quantité (25) d'éléments de miroirs (21 - 21") avec une première position angulaire, et un autre capteur (5 ; 41^{III} - 41^{IV}; 52) recevant un rayonnement électromagnétique d'une deuxième quantité (26) d'éléments de miroirs (21 - 21") avec une deuxième position angulaire, la première quantité (25) et la deuxième quantité (26) d'éléments de miroirs (21 - 21") étant sélectionnées à partir d'au moins une section (I - IV) du réseau de miroirs (3) et formant l'une par rapport à l'autre, relativement aux capteurs (4, 5 ; 41^{I} - 41^{IV}; 51, 52) au moins au nombre de deux, un positif et un négatif d'une structure de grille (30 - 35).

7. Utilisation d'un réseau de miroirs (3), en particulier d'un micro-réseau de miroirs, en tant que filtre de position dans un arrangement de mesure par filtre de position (1), le réseau de miroirs (3) présentant des éléments de miroirs (21 - 21'") mobiles pour la production d'une structure de grille (30 - 35), un rayonnement électromagnétique, en particulier de la lumière, rayonné ou réfléchi par un objet de mesure (13) déplacé devant le filtre de position étant reproduit par le biais du filtre de position sur le capteur (4, 5 ; 41^{I} - 41^{IV}; 51, 52), une ou plusieurs caractéristiques de l'objet de mesure (13) déplacé étant mesurée(s) par le biais d'une modulation temporelle du rayonnement électromagnétique.

8. Utilisation d'un arrangement de mesure par filtre de position (1) selon l'une des revendications 1 à 6 pour la mesure d'une vitesse, d'une direction de mouvement, d'une grandeur de particules et/ou d'un état de surface d'un objet de mesure (13).

9. Procédé de mesure par filtre de position, le rayonnement électromagnétique (7), en particulier de la lumière, rayonné ou réfléchi par un objet de mesure (13) déplacé devant le filtre de position étant reproduit sur au moins un capteur (4, 5 ; 41^{I} - 41^{IV} ; 51, 52) par le biais du filtre de position constitué en tant que réseau de miroirs (3), en particulier de micro-réseau de miroirs, avec des éléments de miroirs (21 - 21") mobiles, les éléments de miroirs (21 - 21") mobiles du réseau de miroirs (3; 35) étant, en ce qui concerne leur position angulaire, réglés de telle sorte que le filtre de position est produit avec une structure de grille (30 - 35) par la répartition locale des positions angulaires des éléments de miroirs (21 - 21") du réseau de miroirs (3; 35), et une ou plusieurs caractéristiques de l'objet de mesure (13) déplacé étant mesurée(s) par le biais d'une modulation temporelle du rayonnement électromagnétique.

10. Procédé selon la revendication 9, **caractérisé en ce que**, en tant que structure de grille (30 - 35), il est réglé une grille de lignes (30, 31, 33) régulière, une grille chirp (32) avec un une constante de grille variant dans une direction ou une grille annulaire.

11. Procédé selon la revendication 9 ou 10, **caractérisé en ce que** le réseau de miroirs (3; 35) est réparti en différentes sections (I - IV) dans lesquelles respectivement différentes structures de grille (35^{I} - 35^{IV}) ou des grilles avec différentes caractéristiques, en particulier l'orientation et/ou la constante de grille de la grille, sont réglées

12. Procédé selon l'une des revendications 9 à 11, **caractérisé en ce que** la structure de grille (30 - 35) réglée est modifiée pendant une mesure, l'orientation et/ou la constante de grille de la structure de grille (30 - 35) pouvant être modifiée et/ou la structure de grille (30 - 35) pouvant être tournée au cours d'une mesure.

13. Procédé selon l'une des revendications 9 à 12, **caractérisé en ce que**, avec un réseau de miroirs (3; 35) dont les éléments de miroirs (21 - 21") sont mobiles en continu ou quasi en continu dans leurs positions angulaires, soit différents capteurs (4, 5 ; 41^{I} - 41^{IV} ; 51, 52) sont pilotés dans différentes sections (I - IV) du réseau de miroirs (3; 35), soit des corrections et/ou focalisations optiques sont entreprises par un réglage des positions angulaires.

14. Procédé selon l'une des revendications 9 à 13, **caractérisé en ce qu'**au moins deux capteurs (4, 5 ; 41^{I} - 41^{IV}; 51, 52) avec des éléments de miroirs (21 - 21") sont pilotés dans différentes positions angulaires, la structure de grille (30 - 35) produite par la répartition des éléments de miroirs (21 - 21") étant, relativement à un capteur (4; 41^{I} - 41^{II} ; 51), le négatif de la structure de grille relativement à l'autre capteur (5; 41^{III} - 41^{IV}; 52).

15. Procédé selon l'une des revendications 9 à 14, **caractérisé en ce que**, au début d'une mesure, des paramètres de grille adaptés automatiquement à un objet de mesure (13), et/ou à un objectif de mesure, en particulier pour un rapport signal-bruit optimisé, sont recherchés et réglés.
